# NOUVEAU FASCICULE DE BREVET EUROPEEN

(11) **EP 0 109 902 B2**
(45) Date de publication et mention de la décision concernant l'opposition: **03.11.1993**
(45) Mention de la délivrance du brevet: 21.01.1987
(21) Numéro de dépôt: 83402208.9
(22) Date de dépôt: 16.11.1983
(51) Int. Cl.: G21C 17/06

(54) **Installation de réparation d'assemblages de combustible nucléaire**
Vorrichtung zur Wiederherstellung von Brennstoffanordnungen
Set-up for repairing a nuclear fuel assembly

(30) Priorité: 16.11.1982 FR 8219162
(43) Date de publication de la demande: 30.05.1984
(73) Titulaire: FRAMATOME, 92400 Courbevoie (FR)
(72) Inventeur: Beuneche, Daniel, F-69660 Collonges Au Mont d'Or (FR); Amiet, Pierre, F-69420 Condrieu (FR)
(74) Mandataire: Fort, Jacques

(56) Documents cités:
- EP-A- 0 033 074
- FR-A- 1 384 145
- FR-A- 1 570 724
- FR-A- 2 260 170
- FR-A- 2 298 859
- FR-A- 2 360 963
- FR-A- 2 395 571

## Description

La présente invention a pour objet une installation permettant de réparer les assemblages de combustible nucléaire du type comprenant un squelette formé de deux embouts reliés par des tirants fixés de façon amovible à l'embout supérieur au moins et des grilles réparties entre les embouts et destinées à maintenir un faisceau de crayons de combustible emprisonnés entre les embouts. A titre d'exemple d'assemblages de combustible de ce type, on peut citer celui décrit et revendiqué dans le document FR-A-2 368 785.

Si la manipulation d'un tel assemblage ne soulève pas de difficulté lorsqu'il est neuf, il n'en est pas de même lorsqu'il a séjourné en réacteur et présente donc une activité importante. Or, pour éviter d'avoir à écarter un assemblage qui présente un ou plusieurs crayons défectueux après qu'il ait séjourné en réacteur et a donc une activité imposant une manipulation à distance sous l'eau, on a déjà proposé des installations permettant de réparer l'assemblage par remplacement d'un ou de plusieurs crayons. Mais toutes les installations proposées jusqu'ici (FR-A-2 360 963 par exemple) prévoient un basculement de 180° de l'assemblage avant enlèvement de l'embout inférieur. Cette approche du problème, basée sur le fait que l'embout inférieur se prête mieux que l'embout supérieur à enlèvement et remise en place, conduit à une installation extrêmement encombrante et exige le basculement d'un conteneur de très grande longueur.

On connaît par ailleurs (document FR-A-2 395 571) un dispositif de manipulation d'assemblages de combustible nucléaire et de leurs composants, assemblages du type comprenant un squelette formé d'embouts reliés par des tirants fixés de façon amovible à l'embout supérieur au moins et des grilles réparties entre les embouts et destinées à maintenir un faisceau de crayons combustibles emprisonné entre les embouts, ce dispositif comprenant au moins un alvéole immergé dans une piscine. Ce dispositif de manipulation permet l'examen des crayons d'assemblage de combustible nucléaire sans retournement. Il n'est pas prévu pour permettre la réparation de ces assemblages, bien que sa constitution générale n'interdise pas de remplacer un crayon.

On connaît également (EP-A-0 033 074) une installation de réparation d'éléments combustibles pour réacteur nucléaire à eau bouillante, ces éléments comportant un boîtier tubulaire à section carrée fixé par des vis à une grille-plaque supérieure et contenant des crayons combustibles parallèles dont certains sont fixés à la grille-plaque. L'installation comprend une chemise de guidage destinée à recevoir le sous-ensemble constitué par les crayons et leurs grilles-plaques, après enlèvement du boîtier par des moyens non décrits. La chemise de guidage, de même section interne que le boîtier, est nécessaire pour maintenir en place les crayons en dépit de leur flexibilité. Elle est munie de deux peignes permettant de maintenir la géométrie des crayons. Une fois que les écrous de fixation de la grille-plaque ont été dévissés par des moyens non décrits, et que la grille-plaque a été enlevée, les extrémités des crayons deviennent accessibles. A ce moment là seulement une plaque de centrage munie de doigts de centrage sur une bride supérieure de la chemise de guidage, destinée à supporter un dispositif de chargement de crayon combustible, peut être placée sur la bride pour guider un outil de saisie de crayon. Ce document ne donne aucune indication sur les moyens permettant de dévisser les écrous. Le problème d'un alignement précis d'un outil de démontage à aligner avec ces écrous n'a pas été apprécié par les inventeurs de l'installations.

L'invention vise à fournir une installation destinée à réparer un assemblage de combustible du type ci- dessus défini sans imposer à l'assemblage d'autre déplacement que des translations horizontales ou verticales, tout en garantissant une mise en place précise et fiable des composants lors du remontage.

Dans ce but, l'invention propose une installation ayant une constitution qui reprend celle du dispositif de manipulation mentionné plus haut, mais de plus conforme à la partie caractérisante de la revendication 1.

L'invention sera mieux comprise à la lecture de la description qui suit d'une installation qui en constitue un mode particulier de réalisation, donné à titre d'exemple non limitatif. La description se réfère aux dessins qui l'accompagnent, dans lesquels :
la figure 1 est un schéma de principe montrant la constitution générale d'un assemblage de combustible susceptible d'être réparé à l'aide de l'installation suivant l'invention ;
la figure 2 est un schéma en élévation montrant la disposition d'alvéoles de réception d'assemblage appartenant à l'installation dans une piscine ;
la figure 3 est un schéma montrant l'ensemble de l'installation et les éléments annexes, en vue de dessus ;
la figure 4 est une vue de dessus, avec des parties arrachées, montrant la plaque de base et les moyens de serrage équipant l'alvéole ;
les figures 5A et 5B sont les parties gauche et droite d'une coupe suivant la ligne V-V de la figure 4, faisant également apparaître un cadre de blocage de l'embout supérieur en place sur ce dernier ;
la figure 6 est une vue en coupe suivant un plan vertical passant par l'axe de l'assemblage manipulé, montrant un corps de centrage et de guidage en place sur le cadre de blocage de l'embout supérieur et une plaque porte-canons ;
la figure 7 est un schéma en perspective montrant un outil de manutention du corps de centrage,
la figure 8 est une vue de détail de l'outil de la figure 7 en coupe suivant un plan horizontal, montrant comment s'effectue le verrouillage de l'outil sur le corps de centrage,
la figure 9 est un schéma montrant la disposition respective de l'assemblage, de la plaque de base et de l'ensemble constitué par le cadre, la plaque porte-canons et le corps de centrage après mise en place de cet ensemble,
la figure 10 est un schéma en perspective d'un outil de blocage du corps de guidage sur l'embout supérieur,
la figure 11 est un schéma en élévation montrant le mode de blocage du corps de guidage, à l'aide de griffes montrées, à gauche, en position de prise, à droite, en position dégagée de l'embout supérieur,
la figure 12 est un schéma en perspective montrant un outil de vérification constituant toise,
la figure 13 montre les parties terminales de l'outil de la figure 12, en coupe suivant un plan passant par son axe,
la figure 14 est un schéma en élévation montrant l'utilisation de l'outil des figures 12 et 13 sur le corps de centrage,
la figure 15 est une vue en perspective montrant un outil de manutention de cônes de centrage et l'un des cônes, séparés de l'outil,
la figure 16 est une vue en coupe à grande échelle de la partie terminale de l'outil de la figure 15, équipé d'un cône,
la figure 17 est un schéma en élévation, montrant la mise en place d'un cône centreur dans un tube guide
la figure 18 est une vue en perspective d'un outil de dessertissage et de déverrouillage des douilles de solidarisation des tubes guides avec l'embout supérieur,
la figure 19 montre la partie terminale de l'outil de

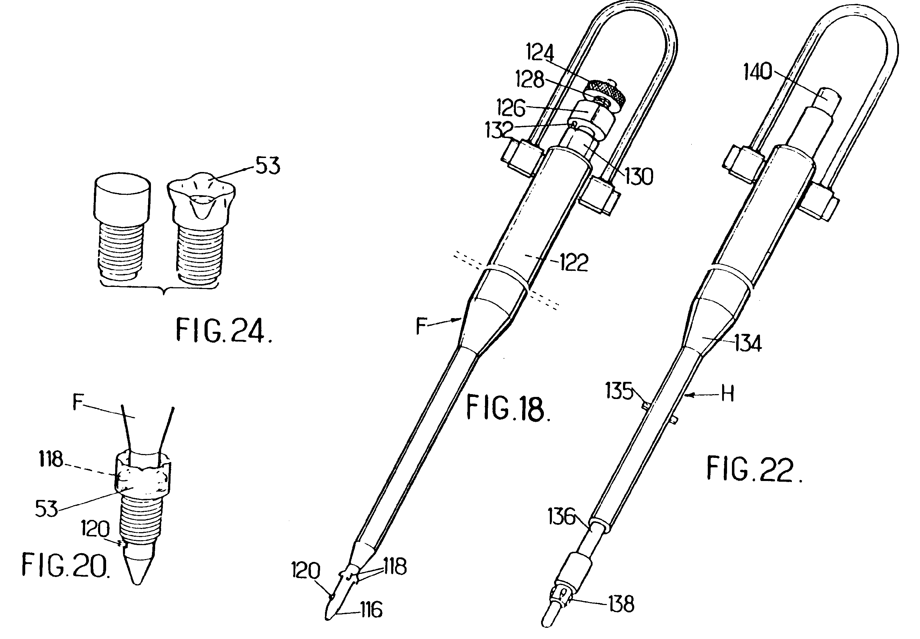

la figure 18, à grande échelle, et en coupe suivant un plan passant par l'axe,
la figure 20 est un schéma à grande échelle, en perspective, montrant l'enlèvement d'une douille après dévissage à l'aide de l'outil de la figure 18,
la figure 21 est un schéma de principe montrant l'outil de la figure 18 en place sur une douille dans l'assemblage,
la figure 22 est une vue en perspective montrant un outil de déformation des douilles de fixation de tirant, permettant de rendre ces dernières imperdables,

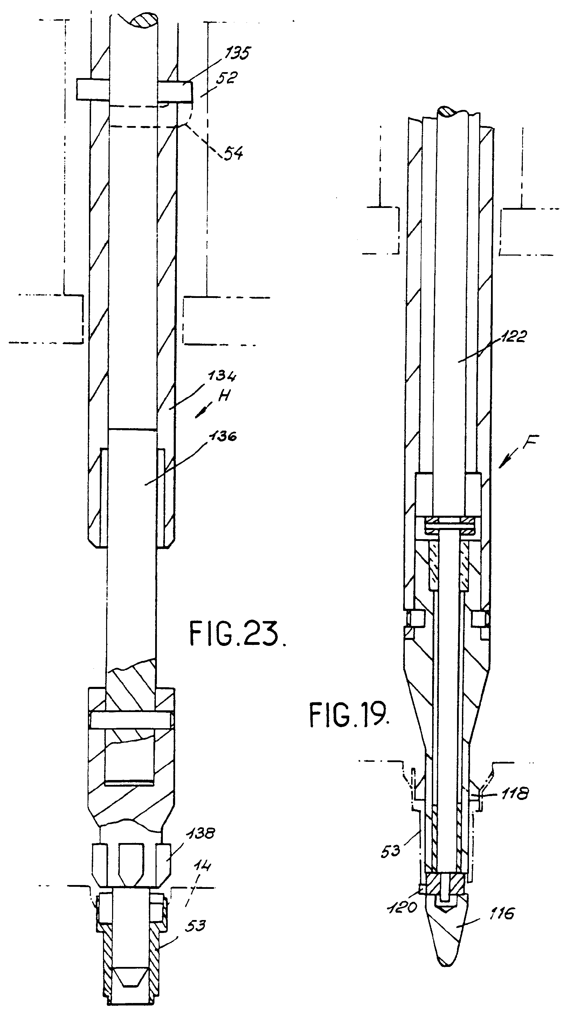

la figure 23 est un schéma de principe, en élévation, de l'opération de déformation d'une douille,

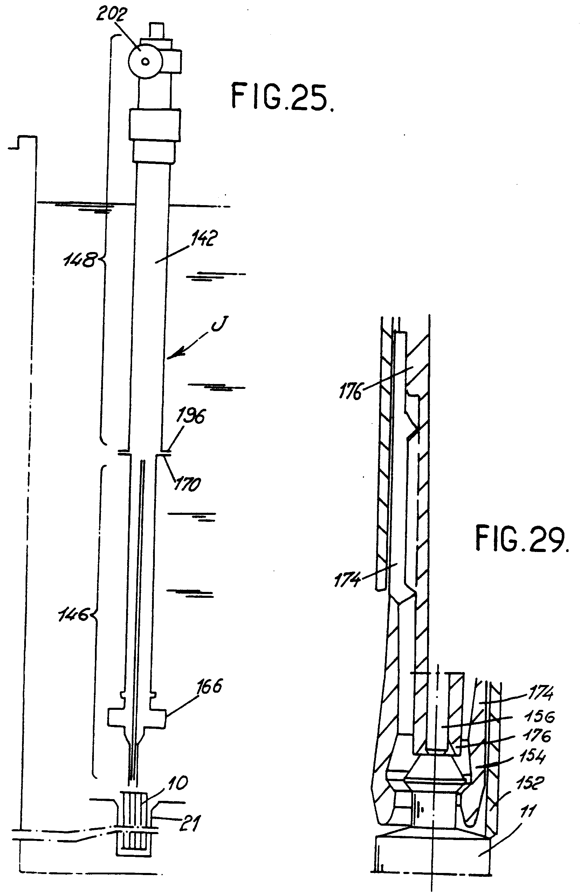

la figure 24 montre une douille avant et après déformation,
la figure 25 est un schéma de principe, en élévation, montrant la disposition relative d'un outil d'extraction et d'insertion de crayon et d'un assemblage avant venue de l'outil en prise,

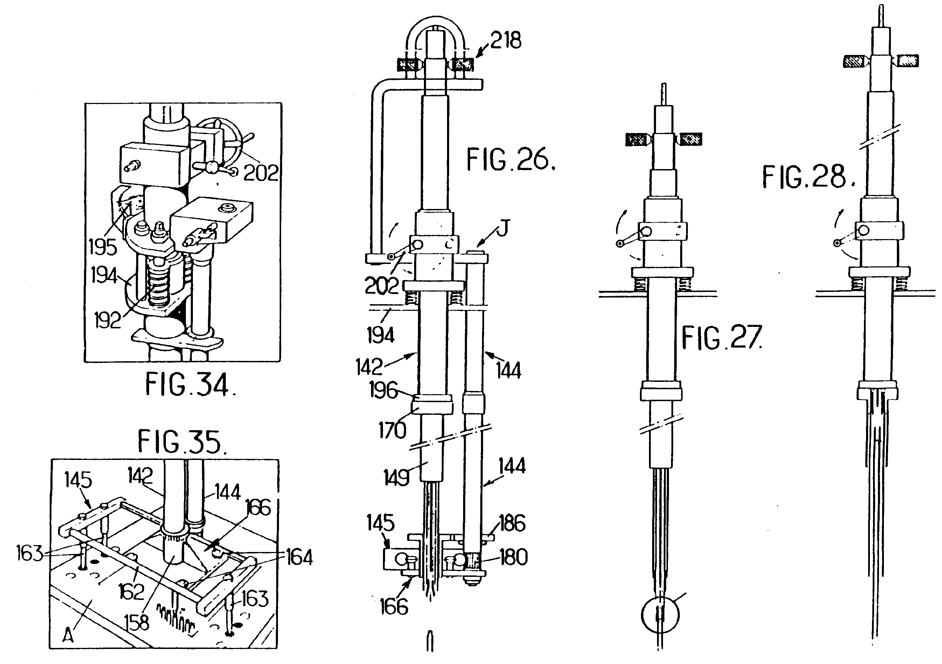

les figures 26, 27 et 28 sont des schémas de principe, en élévation, montrant respectivement l'outil d'extraction dans la position de la figure 25, après descente et fermeture de la pince, et après remontée d'un crayon,

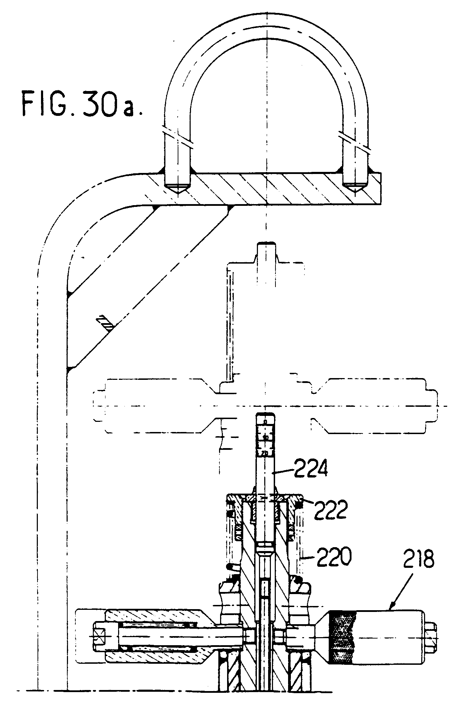

la figure 29 est une vue de détail à grande échelle montrant, à gauche, la pince ouverte et, à droite, la pince fermée sur un bouchon de crayon,

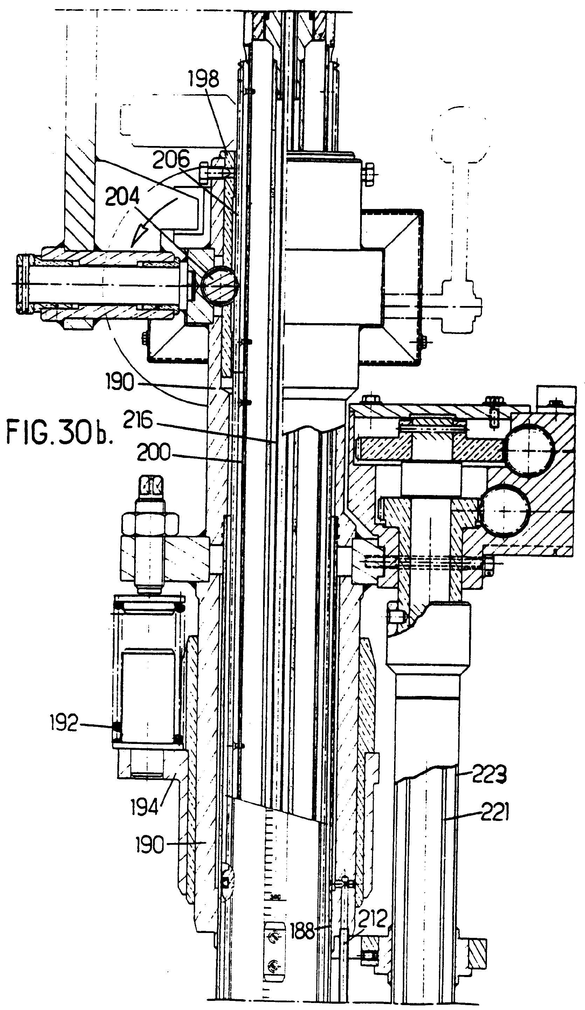

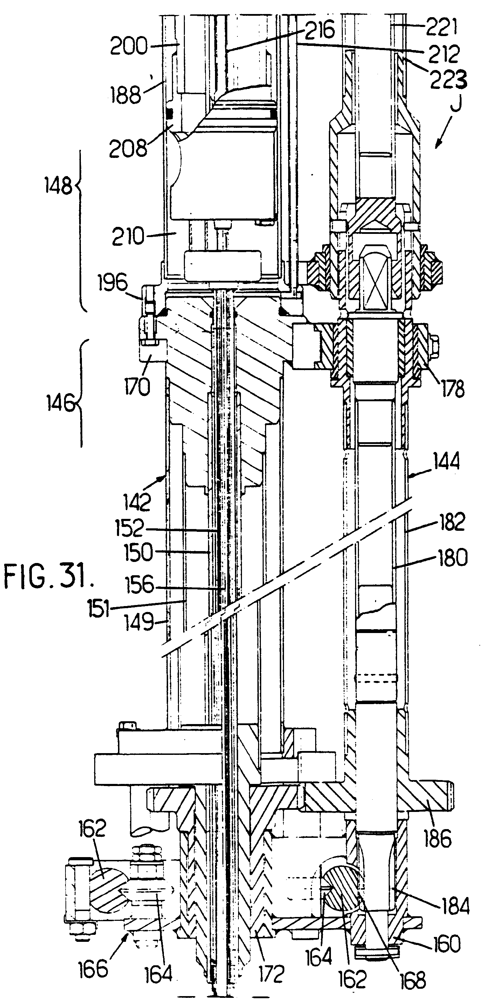

les figures 30A, 30B et 31 sont des vues partielles de la partie haute et de la partie basse de l'outil d'extraction en coupe suivant le même plan vertical,

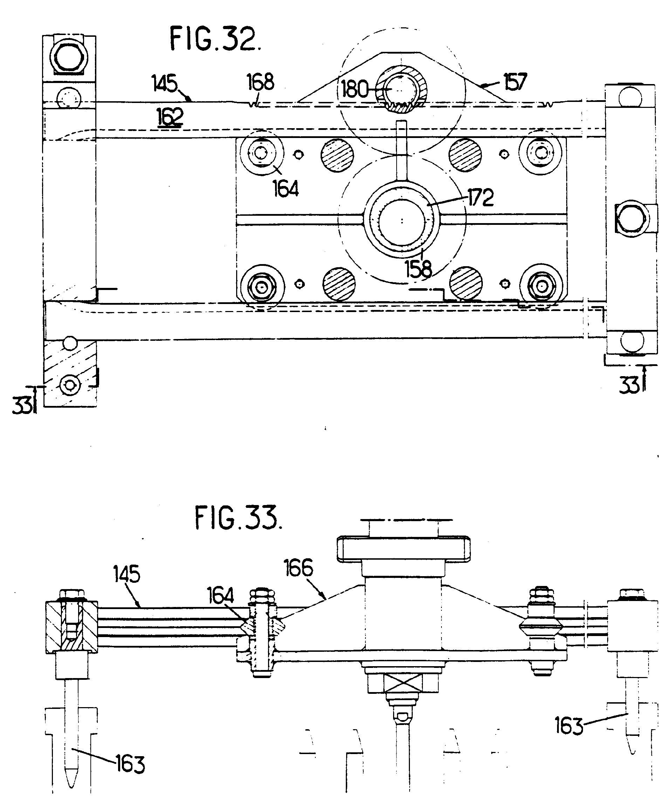

la figure 32 est une coupe suivant la ligne 32-32 de la figure 31,
la figure 33 est une coupe suivant la ligne 33-33 de la figure 32.

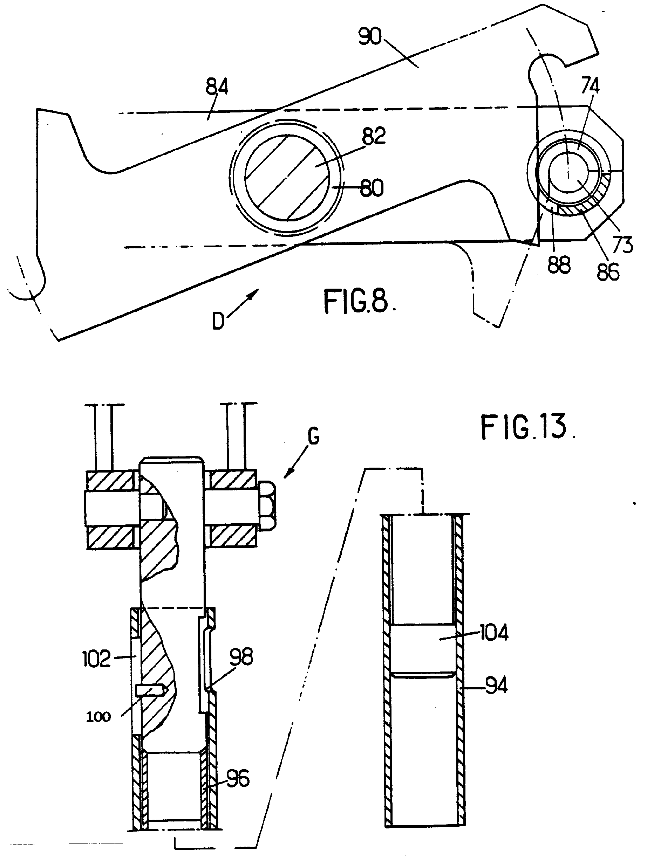

la figure 34 est un schéma en perspective montrant un mécanisme à commande manuelle muni d'un appareil de mesure de la force de pression ou de traction exercée sur le crayon lors de son extraction ou de son introduction,
la figure 35 est un schéma en perspective montrant l'outil J au-dessus d'un alvéole en position d'engagement des pions de centrage équipant son cadre dans les trous des réglettes de la plaque de base A.

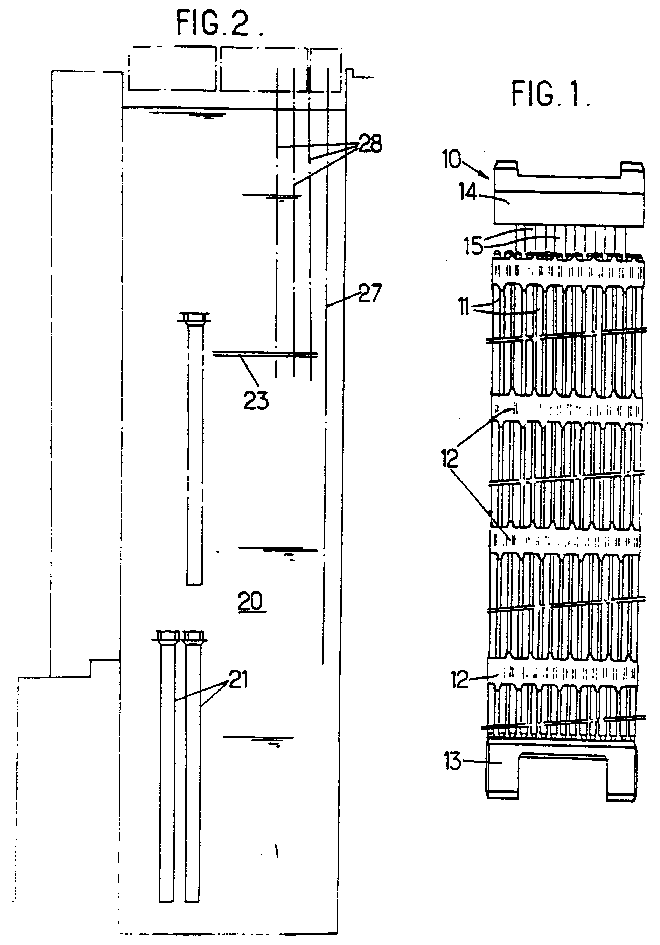

Avant de décrire une installation suivant l'invention, on rappellera brièvement la constitution d'un assemblage combustible auquel elle est applicable. Cet assemblage 10, montré en figure 1 comporte un faisceau de crayons de combustible 11 maintenus par des grilles entretoises 12 réparties le long du faisceau. Les grilles 12 ménagent des passages dont la plupart sont traversés par des crayons de combustible, tandis que les autres sont traversés par des tirants 15 fixés à un embout inférieur 13 et un embout supérieur 14 présentant à sa partie supérieure une forme permettant de le saisir à l'aide d'un outil de manutention. Les tirants 15 sont fixés à l'embout supérieur 14 par des moyens démontables, constitués par des douilles (non visibles sur la figure 1) présentant une partie basse filetée destinée à se visser dans la partie haute d'un tirant et une tête d'appui sur l'embout 14.

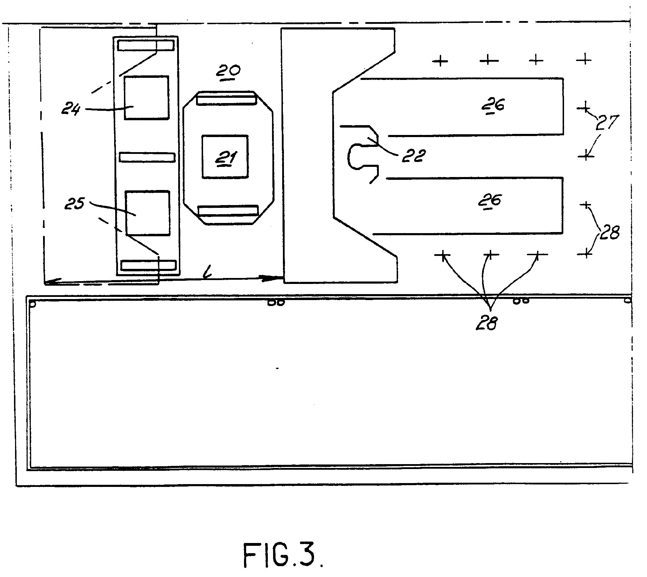

L'installation est destinée à permettre le démontage, la réparation et le remontage d'un assemblage combustible alors que ce dernier est immergé dans l'eau à une profondeur suffisante pour assurer la protection biologique. Dans la pratique, l'installation sera en général montée sur la fosse de la piscine d'évacuation du combustible usé provenant d'un réacteur nucléaire. Dans le mode d'exécution montré en figures 2 et 3, l'installation, placée dans une piscine 20, comporte au moins un alvéole 21, constitué par un récipient de forme parallèlépipédique allongé ouvert à son extrémité haute, accroché à un support 23 reposant sur le fond de la piscine. Ce support est muni de moyens permettant de déplacer verticalement l'alvéole entre une position basse (en traits pleins sur la figure 2) et une position haute (en traits mixtes), décalée de la précédente de plusieurs mètres. Au-dessus de la piscine est prévu un pont roulant mobile sur la distance 1 (figure 3) permettant de déplacer un chariot 22 muni d'un porte-outil dans deux directions perpendiculaires. Le support 23 est également muni de réceptacles 24 et 25 respectivement destinés à des crayons neufs et à des crayons endommagés extraits de l'assemblage. Enfin, le support 23 est muni de diverses surfaces de stockage d'outillage et d'emplacements destinés à recevoir les différents outils, qu'on peut dissocier en outils courts 28 (pour intervention sur l'assemblage lorsque l'alvéole est en position haute) et en outils longs 27 (tels que l'outil d'extraction de crayon).

On décrira maintenant, en succession, les composants actifs les plus importants de l'installation, qu'on peut considérer comme étant :

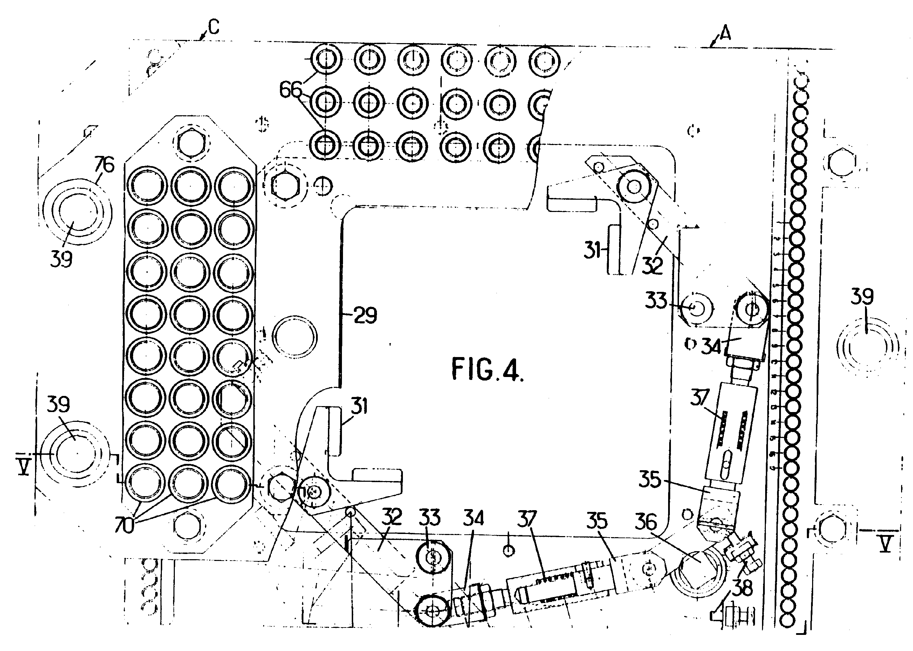

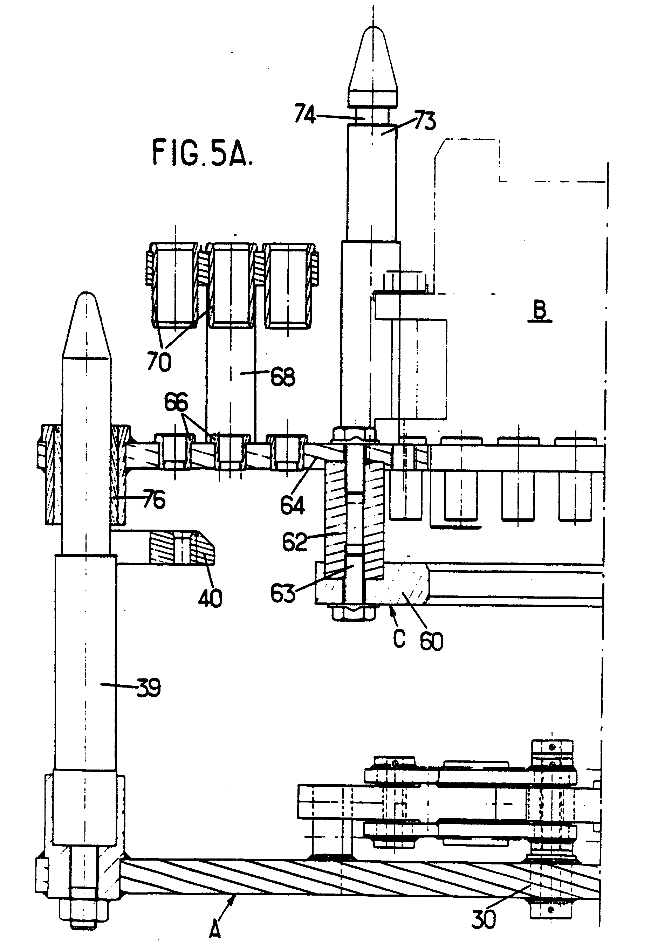

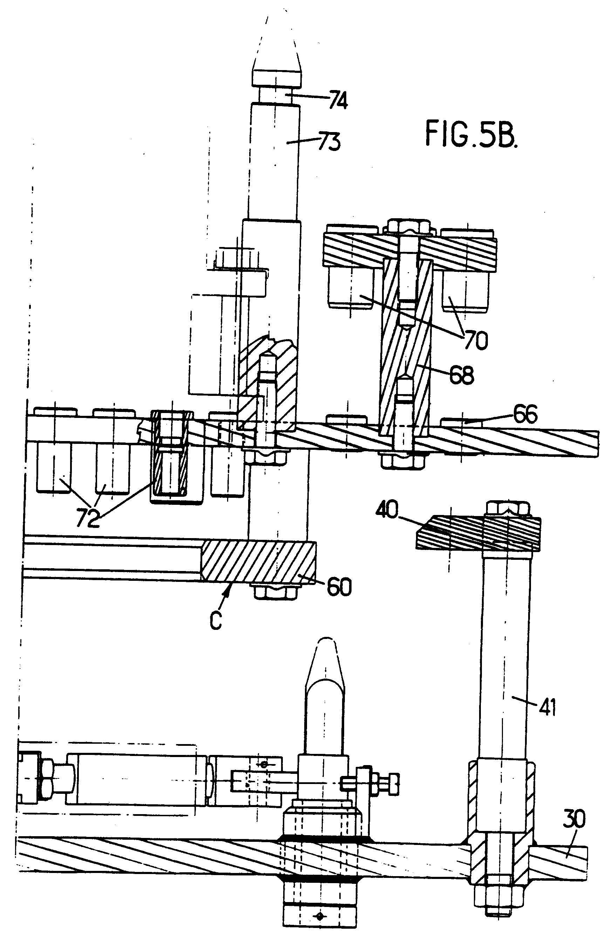

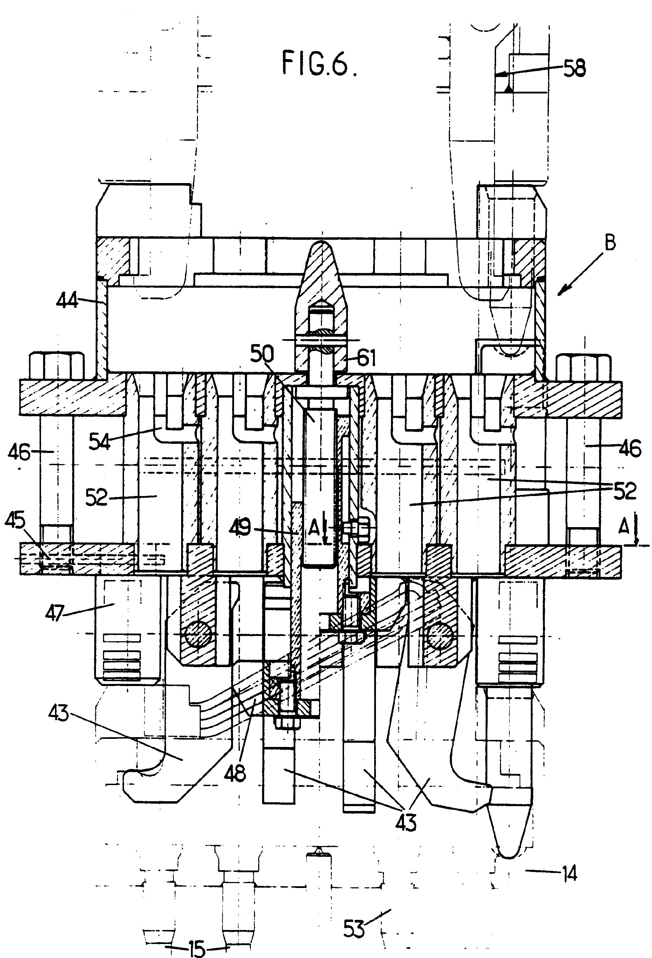

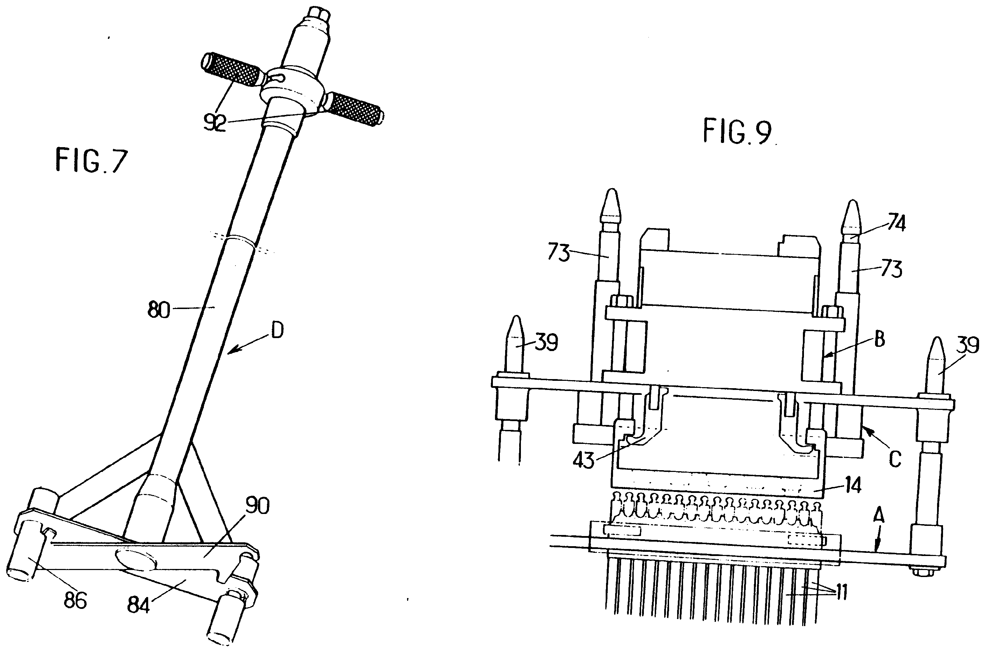

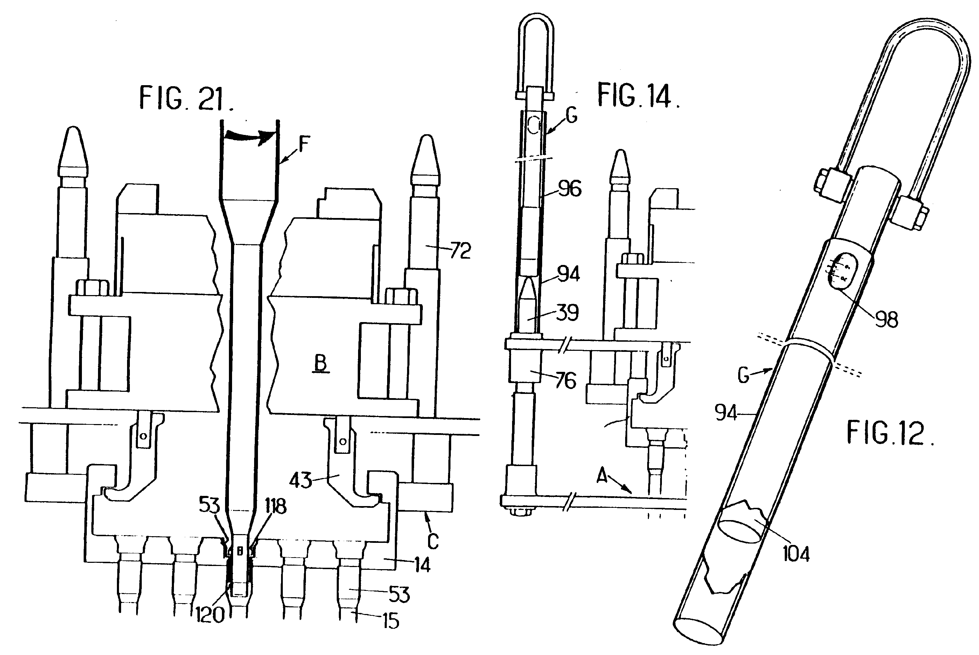

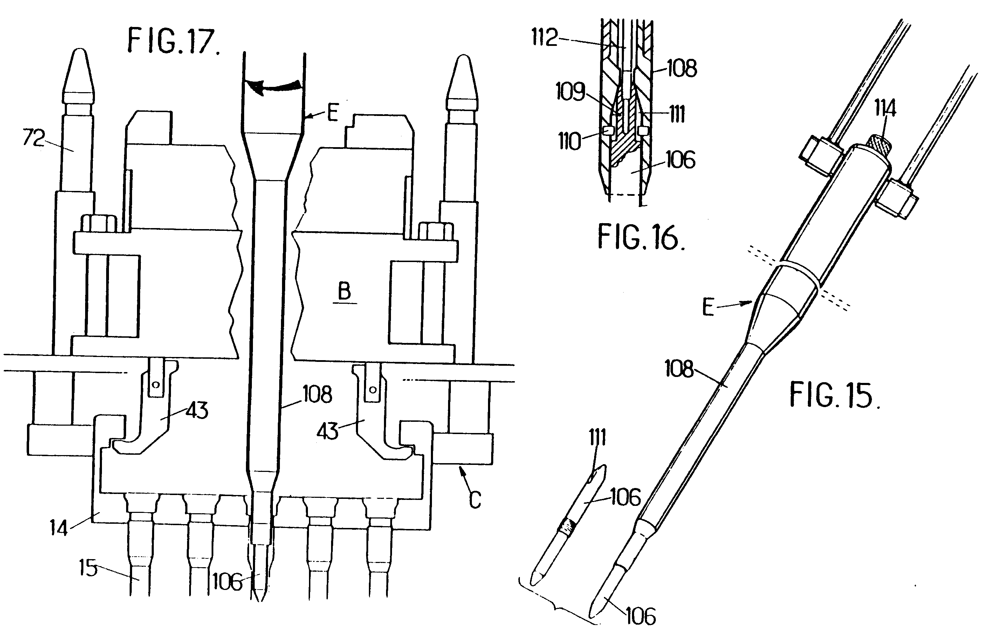

une plaque de base ou de tête A portée par la partie haute de l'alvéole 21 et munie de moyens de centrage dans cet alvéole 21 de l'assemblage à traiter (figures 4 et 5) ;
un corps de centrage B, montré notamment sur les figures 6 et 9, destiné à être fixé sur l'embout supérieur de l'assemblage à l'aide d'un outil ;
un ensemble C constitué par un cadre destiné à limiter la rotation de l'embout supérieur de l'assemblage lors du dévissage des douilles de liaison des tirants, et une plaque porte-canons qui en est solidaire; et les outils de mise en oeuvre, comportant :
un outil D de prise du corps de centrage (figures 7 et 8) ;
un outil E de mise en place et d'enlèvement des cônes de centrage (figures 15-17) ;
un outil F de dessertissage et de dévissage des douilles (figures 18-21) ;
un outil G constituant toise de vérification de l'emplacement du corps de centrage (figures 12-14) ;
un outil H de déformation de douille (figures 22-24) ;
un outil J de manutention de crayon (figures 25-33).

La plaque de tête A, montrée en figures 4 et 5, est constituée par une semelle 30 dans laquelle est ménagée une ouverture 29 de dimension suffisante pour livrer passage à l'assemblage lorsque celui-ci est amené au-dessus de l'alvéole situé en position basse, puis descendu par une pince de manutention également utilisable pour agripper et déplacer le corps de guidage B (figure 6). La semelle 30 porte des moyens de serrage de l'assemblage au niveau de sa grille supérieure 12, permettant de maintenir en position cet assemblage au cours de l'enlèvement et après l'enlèvement de l'embout supérieur. Ces moyens comportent deux bras articulés permettant de rapprocher et d'écarter l'un de l'autre deux vés 31 et d'enserrer ou de libérer deux dièdres opposés de l'assemblage. Ces bras articulés comprennent, à partir de chaque vé 31, un levier 32 tournant sur un axe 33. L'extrémité du levier opposée à celle qui porte le vé est reliée par un poussoir muni de chapes terminales 34, 35 à une barrette entraînée par un carré de manoeuvre 36. Chacun des poussoirs est en deux parties coulissant l'une dans l'autre, la transmission d'effort s'effectuant par un ressort de compression 37, les deux ressorts ayant des tarages légèrement différents (par exemple 30 daN pour l'un, 25 daN pour l'autre). Deux butées réglables, constituées par des vis 38, limitent la rotation du carré de manoeuvre 36 de part et d'autre de la position d'appui des bras articulés, dans laquelle ils sont représentés en traits pleins sur la figure 4. La semelle 30 porte encore divers moyens coopérant avec les autres éléments constitutifs qui seront décrits plus loin. En particulier, elle porte trois colonnes en pions 39 destinés à assurer un positionnement précis du cadre de l'ensemble C qui sera décrit plus loin. La semelle porte également quatre entretoises 41 destinées à maintenir, de part et d'autre de la tête de l'alvéole 21, deux réglettes 40 comportant chacune une rangée de trous destinés à recevoir des pions de localisation portés par le cadre inférieur de l'outil J de manutention des crayons, comme on le verra plus loin.

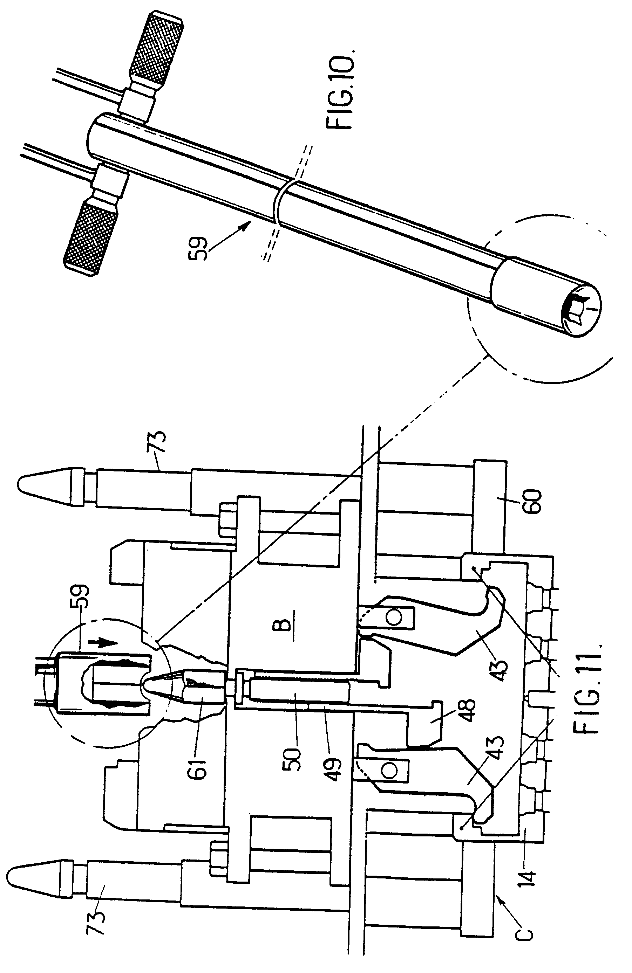

Le corps de centrage B, qui apparaît en coupe sur la figure 6, présente à sa partie supérieure une forme similaire à celle de l'embout supérieur 14, ce qui permet de le saisir à l'aide de la pince 58 qui sert également à manipuler les assemblages. Ce corps de centrage B est prévu pour venir se placer sur l'embout supérieur et pour pouvoir en être solidarisé et désolidarisé. Il peut être regardé comme constitué par un fourreau 44 muni d'une bride et d'un plateau 45 relié à la bride par des vis 46. Sur le plateau 45 sont fixés deux pions 47 en saillie vers le bas, destinés à venir s'engager dans l'embout 14 (en traits fins sur la figure 6) et à assurer le centrage. Les moyens de solidarisation du corps B et de l'embout sont constitués par huit griffes escamotables 43 présentant une disposition similaire à celle des griffes de la pince 58. Ces griffes sont commandées par une came 48 déplaçable le long de l'axe du corps B par une liaison filetée. Cette liaison comprend un écrou 49 solidaire de la came et une vis 50 libre en rotation, mais immobilisée en translation, prévue pour être actionnée à l'aide d'un outil de blocage 59, montré en figures 10 et 11. Cet outil est une simple clé à tube de forme correspondant à celle d'un carré 61 de manoeuvre terminant la vis 50 (figures 6, 10 et 11).

Le corps de centrage B comporte encore des canons de centrage tubulaires 52 destinés à livrer passage à différents outils d'intervention sur les douilles. Ces canons sont maintenus entre le fourreau 44 et le plateau 45 et constituent entretoises de fixation ou d'écartement. Les canons 52, au nombre de vingt-quatre dans le mode de réalisation décrit, sont prévus pour venir au droit des douilles 53 de fixation des tirants 15, constitués par des tubes guides de barre de commande dans l'exemple considéré. Chacun des canons de centrage 52 présente deux gorges diamè- tralement opposées 54 en forme de baïonnette, destinées à recevoir des ergots 135 prévus sur l'outil H, permettant donc de fixer l'orientation de cet outil et sa position longitudinale, correspondant à une butée axiale.

L'ensemble C (figures 4 et 5) comprend un cadre 60 solidarisé d'une plaque porte-canons 64 par des colonnettes 62 et des vis 63. La plaque porte-canons 64, de forme évidée pour livrer passage au corps B, est fixée à ce corps par des vis. Le niveau du cadre 60 par rapport à l'assemblage de combustible à réparer est fixé à la valeur appropriée par les pions 47 de centrage du corps (figure 6), du fait de la solidarisation du cadre et du corps. Le cadre 60 permet de limiter l'amplitude de la rotation de l'embout supérieur 14 lors du dévissage ou du revissage des douilles 53 de liaison entre les tubes guides constituant tirants et l'embout 14. Il comporte dans ce but une ouverture carrée livrant passage à l'embout avec un faible jeu.

La plaque porte-canons 64 est destinée au stockage d'éléments neufs ou usagés au cours de l'intervention sur l'assemblage. La plaque représentée partiellement sur les figures 4 et 5 comporte quarante-huit bagues 66 de réception de douilles (vingt-quatre douilles neuves et vingt-quatre douilles irradiées). Des potences 68 fixées à la plaque 64 portent des canons de guidage 70 situés en face des bagues et destinés à guider les outils de manutention des douilles 53. D'autres bagues 72, au nombre de vingt-quatre dans l'exemple représenté, sont destinées à recevoir des cônes centreurs de tubes guides.

La plaque porte-canons 64 est munie de deux colonnes 73 munies d'un nez conique destiné à faciliter l'introduction d'un outil de préhension qui vient saisir les colonnes au niveau de gorges 74 qui y sont ménagées, comme on le verra plus loin. Pour assurer le guidage et le positionnement transversal précis de l'ensemble constitué par le corps de centrage B, le cadre 60 et la plaque porte-canons 64 sur la plaque de tête A, la plaque 64 est munie de fourreaux 76 venant se glisser sur les colonnes 39.

L'outil D destiné à manipuler l'ensemble constitué par le corps de centrage B, le cadre 60 et la plaque porte-canons 64, représenté en figures 7 et 8, constitue une perche composée de deux tubes coaxiaux 80 et 82 susceptibles de tourner l'un par rapport à l'autre entre une position d'engagement et une position de verrouillage (figure 8). A l'extrémité inférieure du tube externe 80 est fixée, par exemple par soudage, une plaque 84 munie de deux guides cylindriques verticaux 86 destinés à coiffer les colonnes de manutention 73 (figures 5, 8 et 9). Dans chaque guide 86 est ménagée une lumière horizontale, sur à peu près les trois-quarts du développement angulaire du guide, au niveau de la gorge horizontale 74 dans la colonne de manutention 73.

A l'extrémité inférieure du tube intérieur 82 est fixée, par exemple par soudage, une pale 90. Lorsque le tube intérieur 82 est en position de verrouillage (en traits mixtes sur la figure 8), deux encoches ménagées dans la pale 90 viennent s'engager, à travers les lumières 88 des guides, dans les gorges horizontales des colonnes 73 et solidarisent ainsi l'outil D de l'ensemble à manipuler. Lorsqu'au contraire le tube intérieur est dans la position montrée en traits pleins sur la figure 8, la pale 90 libère les colonnes de manutention 73 et permet d'engager l'outil, puis de le dégager, une fois le corps de centrage B amené sur l'embout comme indiqué en figure 9.

Dans le cas illustré sur la figure 7, la rotation des tubes 80 et 82 l'un par rapport à l'autre est obtenue par un jeu de deux poignées 92 placées en haut de la perche.

Etant donné que les opérations effectuées sur un assemblage 10 ont lieu sous une forte épaisseur d'eau, il est difficile de vérifier visuellement, même si une caméra de télévision est immergée à proximité de l'embout supérieur 14, si ce dernier est correctement engagé sur les extrémités des tubes guides 15.

L'outil G montré en figures 12 à 14 est destiné à permettre cette vérification depuis le plancher de service placé au-dessus de la piscine. L'outil G est constitué par un tube externe 94 dont la partie terminale est prévue pour coiffer l'un des pions 39. Ce tube externe 94 contient un tube interne coulissant 96 qui joue le rôle de palpeuret permet de déterminer la différence de niveau entre l'extrémité du pion et l'extrémité du tube externe reposant sur la pièce dont le niveau est à contrôler, constituée par l'un des fourreaux 76 (figure 14). Une indication directe sur la différence de niveau est fournie par une graduation gravée sur le tube interne et apparaissant dans une fenêtre 98 du tube externe 94 (figure 12). Un clavetage coulissant entre les tubes, constitué par une vis 100 et une rainure 102 (figure 13) évite la rotation relative des deux tubes. Un bouchon plein 104 placé dans la partie inférieure du tube interne assure la protection biologique de l'opérateur. L'outil G, comme l'outil 59 et la plupart de ceux qui seront décrits plus loin, comporte un anneau permettant de suspendre l'outil à un pont roulant de manutention.

Pour faciliter la remise en place de l'embout 14 après remplacement de crayons de combustible, il est prévu de remplacer les douilles 53 par des cônes 106 de centrage au fur et à mesure de l'enlèvement des douilles, avant retrait de l'embout 14. Les tubes guides 15 sont ainsi amenés à se replacer correctement dans les logements de l'embout lors du remontage. La mise en place et l'enlèvement des cônes 106 peuvent s'effectuer à l'aide de l'outil E montré en figures 15 à 17. Cet outil comprend un tube externe 108 muni à sa partie inférieure d'un logement conique 109 de forme correspondant à celle des cônes centreurs 106, constitués par des tiges à extrémités coniques et à partie médiane filetée. Ce tube externe se solidarise en rotation du cône sur lequel il est engagé par insertion de deux tétons 110 dans des rainures 111 des cônes (figure 16). Dans le tube externe 108 peut tourner une tige centrale 112, manoeuvrable à l'aide d'un bouton moleté 114, dont l'extrémité filetée peut se visser dans les cônes.

L'enlèvement des douilles 53 de l'assemblage à réparer, puis la mise en place de douilles neuves exigent, lorsque ces douilles sont verrouillées en place après vissage, deux outils distincts F et H, respectivement représentés en figures 18-21 et en figures 22-23.

Les deux outils sont destinés à être utilisés sur des assemblages comprenant des douilles 53 qui, lorsque l'assemblage est prêt à être utilisé, sont serties sur l'embout. L'outil F est prévu pour dessertir les douilles et les dévisser, puis pour les transférer, et enfin pour remettre en place des douilles neuves qui sont ultérieurement serties à l'aide de l'outil H.

L'outil F comporte un corps dont la partie terminale est destinée à venir en prise avec une douille 53. Cette partie terminale comporte un cône 116 de centrage dans le tube guide 15, puis une portion présentant un croisillon 118 destiné à se loger dans quatre alvéoles à 90° que présentent les douilles serties (figure 24). Cette portion est traversée par un doigt escamotable 120 pour retenir les douilles au cours de leur transfert. Dans le corps est placée une tige rotative 122 (figure 21) à laquelle est fixé un disque moleté 124 (figure 18). Un second disque 126, claveté coulissant sur la tige, est repoussé par un ressort 128 vers un six-pans 130 solidaire du corps qu'il permet d'entraîner en rotation. Le disque 126 est muni d'un ergot 132 qui coopère avec des crans du six-pans 130 de manière à verrouiller la tige dans deux positions angulaires correspondant, l'une à la rétraction de l'ergot 120, l'autre à la saillie de cet ergot 120 hors de la partie inférieure de l'outil.

L'outil de sertissage H montré en figures 22 et 23 est destiné à refouler une paroi mince de la tête cylindrique des douilles neuves (figure 24) dans des logements prévus à cet effet dans l'embout supérieur 14. Il comporte dans ce but un tube extérieur 134 dont la partie inférieure comporte des ergots 135 destinés à venir se loger dans les gorges en baïonnette 54 des canons de centrage 52 (figure 6). Dans le tube 134 est montée une tige 136 en deux parties. La partie inférieure de la tige porte un mandrin 138 pour sertir les douilles en leur donnant la forme indiquée à droite en figure 24. Elle est liée en rotation au tube extérieur 134 dans lequel elle peut coulisser axialement sur une longueur déterminée par un clavetage coulissant (non représenté). La partie supérieure de la tige est en appui axial contre la partie inférieure. Elle est reliée au tube extérieur par une liaison vis-écrou qui permet, en la faisant tourner à l'aide d'un carré 140, d'exercer sur la partie inférieure un effort de poussée axiale de déformation de la douille. Cet effort peut être dosé en agissant sur le carré 140 à l'aide d'une clé dynamométrique.

L'installation comprend encore un outil J destiné à intervenir sur l'assemblage une fois que l'embout supérieur a été démonté à l'aide des moyens décrits jusqu'ici. Cet outil J permet d'extraire les crayons combustibles défectueux, de les évacuer, puis de remettre en place un élément de remplacement, constitué par un crayon neuf ou un élément ayant la même forme externe.

L'outil J, montré en figures 25 à 35, peut être regardé comme constitué de deux perches verticales 142 et 144 et d'un cadre de centrage, déplaçables en bloc.

La perche 142 constitue le corps principal contenant le dispositif de préhension. La perche auxiliaire 144 (figures 31-35) sert à déplacer, en plan, l'outil de préhension par rapport au cadre 145 une fois ce dernier engagé dans la plaque de base A (figure 35) et à amener exactement la pince de préhension face à l'emplacement d'un assemblage où un crayon est à saisir ou à déposer.

Chaque perche est constituée d'un tronçon bas 146 et d'un tronçon haut 148. Les deux tronçons hauts d'une part, les deux tronçons bas d'autre part, sont solidaires de façon à constituer un ensemble de longueur plus faible que celle de l'outil, manipulable en bloc. Le transport de l'outil est ainsi facilité. Chaque tronçon haut est fixé au tronçon bas correspondant par des moyens démontables, tels que des vis pour la perche 142.

Dans la perche 142, le tronçon bas 146 contient et guide la pince de préhension de crayon et protège ce dernier lorsqu'il a été soulevé, au cours des déplacements verticaux et horizontaux de l'outil J. Le tronçon haut 148 contient l'ensemble des organes de commande, raccordés aux organes mobiles du tronçon bas 146 par des moyens également démontables, qui ne seront pas décrits car ils peuvent avoir n'importe quelle constitution classique.

Le tronçon bas 146 de la perche 142 comporte une chemise externe 149 qui constitue un organe de structure. Dans cette chemise 149 est placé un fourreau 150, entouré par un tube 151 destiné à accroître la rigidité du tronçon 146. Le fourreau 150 et le tube 151 restent immobiles lors de la pose et de la dépose d'un crayon dans l'assemblage 10. Dans le fourreau 150 sont disposés concentriquement un tube composite 152 de fermeture d'une pince de préhension 154 et un palpeur 156. Tous ces éléments sont raccordables à des organes de commande correspondants situés dans le tronçon 148 par des moyens contenus dans la zone représentée en vue d'extérieur sur la figure 31.

La partie basse de la chemise 149 est fixée à un chariot 166 d'alignement grossier du fourreau 150 avec l'emplacement de crayon approprié. chariot capable de se déplacer en translation horizontale sur le cadre 145. Ce cadre 145 (figures 31-33 et 35) comporte deux rails parallèles horizontaux 162 reliés par des traverses. Il est muni de pions de centrage 163 (figure 33) destinés à s'engager dans les trous des réglettes 40 de la plaque de base A (figues 5A, 5B). Les rails 162 ont une section circulaire encochée. Ils guident et emprisonnent quatre galets 164 à axe vertical, portés par le chariot 166 qui comporte deux bagues 158 et 160, destinées respectivement à retenir en translation axiale les perches 142 et 144. L'un des rails 162 est muni d'une crémaillère 168 servant au positionnement approché du fourreau, comme on le verra plus loin.

Le fourreau 150 (figures 26-31) est de forme tubulaire et d'épaisseur suffisamment faible pour présenter une légère flexibilité sur sa partie libre, entre une bride supérieure 170 de liaison avec le tronçon haut 148 et une douille inférieure 172 qui tourne librement sur le fourreau et dans la bague 158, douille qui retient également le tube 151 en translation. La douille 172 est excentrée pour permettre de centrer le fourreau de façon précise, comme on le verra plus loin.

Le tube composite 152 est en plusieurs pièces assemblées. Son diamètre est plus faible à la partie inférieure qu'à la partie haute pour qu'il puisse se placer à la verticale du crayon 11 à extraire sans être gêné par les tubes guides 15 et par les cônes centreurs 106 mis en place lors du démontage de l'embout supérieur. Le tube 152 est libre de coulisser, à l'intérieur du fourreau 150, sur la longueur nécessaire pour que le crayon extrait soit totalement protégé par le fourreau 150 : cette longueur dépasse fréquem- ment 4 m dans les installations destinées aux assemblages combustibles actuels.

Le tube composite 152 a pour fonction de fermer la pince 154 de préhension du crayon et de transmettre l'effort d'insertion du crayon en exerçant un effort vertical sur un épaulement pratiqué sur le bouchon, comme le montre la figure 29.

La partie supérieure du tube composite 152 est munie d'une bride (non visible sur les figures) de liaison avec l'élément correspondant du tronçon supérieur.

La pince 154 (figure 29) est prévue pour être en position ouverte au cours de l'approche vers le crayon et être fermée par le déplacement axial du tube composite 152, après venue en contact du palpeur 156. Elle est constituée par des doigts élastiques d'une pièce 174, généralement en acier inoxydable, vissée sur un embout tubulaire 176 qui guide également le palpeur 156. Cet embout 176 est relié au tronçon haut par des moyens coulissants (non visibles sur les figures).

Le palpeur 156, déplaçable le long de l'axe de la perche 142, a pour but de vérifier que la tête du crayon 11 est bien positionnée par rapport à la pince 154 avant fermeture de cette dernière. Dans sa position de repos (figure 26), ce palpeur dépasse le niveau bas de la pince 154 d'une longueur déterminée, par exemple 10 mm. Sa partie inférieure est constituée par une tige inoxydable de faible diamètre. Il est relié à un élément correspondant dans le tronçon haut 148 par un tube terminé par un embout fileté (non visible sur les figures).

Le tronçon inférieur de la perche auxiliaire 144 est retenu en translation à chacune de ses extrémités par rapport à la chemise 149 du corps principal, par la bague 160 et par un collier 178 (figure 31). Il est constitué de deux tubes coaxiaux 180 et 182, libres en rotation l'un par rapport à l'autre, mais retenus en translation axiale. L'extrémité inférieure du tube interne 180 porte une denture 184 qui engrène la crémaillère 168 portée par l'un des rails. On peut en conséquence, par rotation du tube 180, déplacer les pions 163, solidaires des rails 162, par rapport à l'extrémité inférieure du fourreau 150, donc effectuer un réglage approché.

Le tube externe 182 est destiné au réglage fin de l'extrémité inférieure du fourreau 150. A cet effet, il porte une couronne dentée 186 d'entraînement de la douille 172 excentrée autourde l'axe de la pince. L'ex- centrement, par exemple de 2,5 mm, permet un réglage fin en plan de la position du fourreau.

Le tronçon haut de la perche 142 (figures 30 et 31) comporte une chemise extérieure 188 prolongée vers le haut par le manchon 190 et qui enveloppe les mécanismes de commande. L'ensemble constitué repose, par l'intermédiaire de ressorts 192, sur un palier centreur 194 solidaire de moyens d'accrochage au pont roulant. Un appareil 195 de mesure de déplacement relatif entre le palier 194 et le manchon (190) (figure 34) indique la force de traction ou de pression exercée sur le crayon lors de l'extraction ou de l'introduction.

La partie basse de la chemise 188 est munie d'une bride 196 (figure 31) de raccordement avec la bride terminale 170 de la chemise 149 du tronçon bas. Un palier lisse 198 fixé dans la partie supérieure de la chemise 188 guide un tube 200 fixé au tube composite 152.

Les tubes 200 et 152 sont déplaçables verticalement en bloc, à l'aide d'un mécanisme placé dans le tronçon haut de la perche 142. Dans le mode de réalisation illustré en figure 34, ce mécanisme est à commande manuelle. Il comporte un volant 202 lié par un arbre à un pignon 204 attaquant une crémaillère 206 solidaire du tube 200. L'ensemble mobile verticalement peut être équilibré par pression pneumatique. Pour cela, la partie basse du tube 200 constitue un piston 208 délimitant, avec la chemise 188, un compartiment 210 dans lequel un canal 212 permet d'amener du gaz sous pression réglable. L'ensemble comporte de plus des éléments annexes d'immobilisation du tube 200 dans n'importe laquelle de ses positions (non représentés), qui sont généralement complétés par un dispositif à rochet sur le pignon 204 ou un pignon appartenant à un ensemble symétrique disposé de l'autre côté du tube 200 pour équilibrer les efforts latéraux. Ce dispositif à rochet ne permet la descente de l'ensemble mobile verticalement que sur intervention d'un opérateur.

Le tronçon haut de la perche 142 contient encore un tube 216 destiné à transmettre le mouvement de verrouillage de la pince 154 et la poussée de mise en place d'un crayon 11 dans l'assemblage 10. Le tube 216 est immobilisable, par rapport au tube 200 qui porte la crémaillère 206, par un dispositif de verrouillage 218 à deux positions (pince ouverte, pince fermée). La partie inférieure de ce tube 216 porte une bride de liaison avec le tube composite 152. Le poids de cet ensemble est équilibré par un ressort 220 en appui sur l'ensemble porte-crémaillère et sur lequel repose un écrou 222 réglable sur une tige filetée 224 fixée au tube 216 (figure 32).

Le tronçon haut 148 est muni de moyens pour indiquer la position du palpeur 156 par rapport à la pince et, donc, la position de la pince par rapport au crayon lors de la prise de ce dernier. Ces moyens peuvent être constitués par une graduation gravée sur le tube 200 et dont une fraction variable suivant la position du palpeur apparaît au-dessus du palier 198.

Le tronçon haut de la perche auxiliaire 144 (figure 30B) est constitué par deux tubes rotatifs 221 et 223 qui se raccordent aux tubes 180 et 182 du tronçon bas par des moyens d'entraînement en rotation qui se dégagent lorsqu'on soulève le tronçon 144. Les tubes 221 et 223 sont l'un et l'autre munis à leur extrémité haute d'un mécanisme d'entraînement en rotation constitué par une roue tangente solidaire du tube et une vis sans fin actionnable manuellement (figure 30B). Par rotation des tubes 221 et 223, on peut successivement réaliser un réglage approché et un réglage fin en plan de la position du fourreau.

La séquence des opérations de réparation d'un assemblage 10, par enlèvement d'un crayon défectueux et insertion d'un élément de remplacement, peut être la suivante dans l'installation qui vient d'être décrite.

L'assemblage 10 à réparer est d'abord déposé, à l'aide d'un outil classique de manutention de combustible, dans l'alvéole de réparation 21 accroché à un support 23 installé en piscine, dans la fosse d'évacuation du combustible usé (figure 2). L'alvéole est alors relevé jusqu'au niveau haut, indiqué en traits mixtes sur la figure 2. Les moyens de serrage équipant la plaque de base A (figures 4 et 5) sont actionnés pour immobiliser l'assemblage 10 dans l'alvéole. Puis le corps de centrage B et le cadre C sont amenés sur l'embout B supérieur 14 à l'aide de l'outil D. Le corps de centrage B est ensuite verrouillé sur l'embout supérieur 14 par engagement des griffes 43 à l'aide de l'outil 59 (figures 10 et 11). ). Le niveau de l'embout supérieur 14 est repéré à l'aide de l'outil toise G (figures 12-14). Chaque douille 53 de fixation de l'embout sur les tubes guides est enlevée à son tour à l'aide de l'outil F. Pour cela, l'outil F est inséré à fond dans la douille à enlever, ergot 120 rétracté. Le croisillon 118 s'engage alors dans les zones prévues à cet effet de la partie mince de la douille. En faisant tourner l'outil, on dévisse la douille et on la dégage de son tirant 15. En faisant tourner d'un demi-tour la bague 126, l'ergot 120 fait saillie sous la douille et permet d'enlever celle-ci. Les vingt-quatre douilles irradiées ainsi extraites sont déposées dans des bagues 66 de la plaque porte-canon 64, déjà munie de vingt-quatre douilles neuves. AI'aide de l'outil E (figures 15-17), on met en place les cônes de centrage 106 dans les tirants 15. On peut alors, au moyen de l'outil de manutention D, évacuer le corps de centrage B et l'embout 14 vers le stand de stockage.

L'enlèvement de l'embout supérieur permet d'accéder aux crayons défectueux 11. L'alvéole 21 est tout d'abord abaissé jusqu'à la position montrée en traits pleins sur la figure 2. L'outil J est amené au-dessus de l'alvéole, puis descendu de façon à engager les pions 163 de centrage équipant son cadre dans les trous appropriés des réglettes 40 de la plaque de base (figure 35). L'extrémité inférieure du fourreau 150 et de la pince 154 est ensuite déplacée horizontalement jusqu'à ce qu'elle se trouve exactement au droit du crayon à enlever, par action sur les tubes 180-182 de la perche auxiliaire 144. La pince 154 est descendue sur le crayon (figure 29), sa venue en position de prise étant indiquée par le palpeur 156. On ferme alors la pince 154 par descente du tube composite 152, puis on relève la pince 154, le tube 152 et le crayon 11 jusqu'à ce que ce dernier soit complètement contenu dans le fourreau 150 qui le protège. Le crayon est alors complètement dégagé de l'alvéole et peut être transporté vers un conteneur de stockage. L'élément de remplacement est alors amené et inséré par un processus inverse.

Une fois les éléments défectueux ainsi remplacés, l'embout supérieur doit être remis en place. Pour cela, on remonte l'alvéole dans la position montrée en traits mixtes sur la figure 2. On remet en place l'embout 14 muni de son corps de centrage B. L'insertion de l'embout 14 est facilitée par les cônes de centrage 106 vissés à la place des douilles 53. La position de l'embout est vérifiée à l'aide de l'outil toise G. Les moyens de serrage de la première grille dans la plaque de base A sont desserrés à l'aide de l'outil 59 venant s'engager sur le carré de manoeuvre 36. Les vingt-quatre cônes de centrage sont dévissés, puis enlevés, à l'aide de l'outil E. Les vingt-quatre douilles 53 sont mises en place et vissées à l'aide de l'outil F puis déformées à l'aide de l'outil H. Les griffes 43 du corps de centrage B sont dégagées de l'embout 14 à l'aide de l'outil 59. L'assemblage réparé peut alors être enlevé. Pour cela, on abaisse l'alvéole 21 qui le contient et on reprend l'assemblage 10 à l'aide de l'outil de manutention du combustible porté par le pont passerelle de la piscine.

## Revendications

1. Installation de réparation d'assemblage de combustible nucléaire, l'assemblage considéré comprenant un squelette constitué d'embouts su- périeuret inférieur reliés par des tirants (15) fixés, de façon amovible à l'embout supérieur (14) au moins, et des grilles (12) réparties entre les embouts et destinées à maintenir un faisceau de crayons de combustible (11) emprisonnés entre les embouts, la dite installation comprenant :
au moins un alvéole immergé dans une piscine, déplaçable verticalement et muni, à sa partie haute, d'une plaque de base (A) présentant une ouverture (29) de passage de l'assemblage et équipée de moyens (31-37) actionnables pour serrer la partie haute de l'assemblage au niveau de la grille supérieure (12) ;
un corps de centrage (B) prévu pour être manipulable par un outil de manutention (D), destiné à être placé au-dessus de l'embout supérieur (14) de l'assemblage et au-dessus de l'ouverture (29) de la plaque de base (A) et à se verrouiller sur l'embout supérieur en se centrant sur lui, et percé de moyens tubulaires de centrage (52) d'un outil (F) placés de façon à s'aligner avec les tirants, cet outil (F) étant insérable à travers lesdits moyens de centrage (52) pour désolidariser chacun desdits tirants de l'embout supérieur ; et
un ensemble (C) comprenant un cadre (60) dans lequel la partie terminale de l'embout supérieur (14) est insérable, le dit ensemble étant muni de moyens (76) de centrage sur la plaque de base (A), et des moyens (70) de guidage d'un outil (F) de manutention de douilles, placés face à des bagues (66) de réception de douilles, bagues portées par une plaque évidée (64) appartenant à l'ensemble (C).

2. Installation selon la revendication 1, caractérisée en ce qu'elle comprend un outil (J) de manutention de crayon (11) de combustible, comportant au moins une perche (142) munie de moyens permettant de la déplacer dans la piscine et de l'amener au droit d'un alvéole (21) et contenant une pince à crayon (154) déplaçable verticalement dans la perche et comportant un ensemble de centrage horizontal de la pince sur un crayon.

3. Installation selon la revendication 2, caractérisée en ce que l'ensemble de centrage comporte un chariot (166) fixé à une chemise externe (149) de la partie basse de la perche, déplaçable en translation horizontale sur un cadre (145) engageable verticalement sur des moyens d'alignement solidaires de la plaque de base.

4. Installation selon la revendication 3, caractérisée en ce que les moyens d'alignement comportent une série de trous ménagés dans des réglettes (40) de la plaque de base (A), coopérant avec des pions de centrage (163) du cadre (145).

5. Installation selon la revendication 3 ou 4, caractérisée en ce que les moyens d'alignement comportent de plus une douille excentrée (172) solidarisée dans le plan horizontal d'un fourreau (150) de guidage vertical de la pince, et des moyens de rotation de la douille (172) dans une bague (158) solidaire en plan du chariot.

6. Installation suivant la revendication 3, 4 ou 5, caractérisée en ce que l'outil (J) comprend une seconde perche (144) parallèle à la première, munie à sa partie basse de moyens d'entraînement du chariot (166) et éventuellement de la douille (172), et à sa partie haute de moyens de commande reliés mécaniquement aux moyens d'entraînement.

7. Installation selon l'une quelconque des revendications 2 à 6, caractérisée en ce que la perche (142) comporte un palpeur (156) déplaçable le long de l'axe de la perche (142) entre une position de repos dans laquelle il dépasse le niveau bas de la pince (154) d'une longueur déterminée et une position haute dans laquelle il est refoulé par un crayon lorsque la pince est en prise sur ledit crayon, relié à un élément d'affichage à la partie haute de la perche.

8. Installation selon l'une quelconque des revendications 2 à 6, caractérisée en ce que la partie basse de la pince comprend un tube composite (152) déplaçable par rapport à la pince entre une position haute où la pince est ouverte et une position basse de fermeture de la pince sur un crayon et d'appui axial sur le crayon.

9. Installation selon la revendication 8, caractérisée par des moyens placés dans la perche (142) pour descendre en bloc la pince (154) et le tube composite (152) et éventuellement le palpeur (156) entre une position basse où la pince est en prise sur un crayon dans l'alvéole et une position haute où la pince maintient la totalité du crayon dans une chemise de protection (150) solidaire de la perche (142).

10. Installation selon l'une quelconque des revendications précédentes, caractérisée en ce que le corps de centrage (B) comprend des griffes escamotables (43) de solidarisation avec l'embout, commandées par une came (48) déplaçable le long de l'axe du corps (B) par une liaison filetée actionnable à l'aide d'un outil (59) introduit par le haut.

11. Installation selon la revendication 10, caractérisée en ce que le corps de centrage (B) porte des canons de centrage tubulaires (52) destinés à livrer passage à des outils d'intervention sur des douilles (53) de solidarisation de l'embout (14) et des tirants (15) et, éventuellement, à réaliser une butée axiale d'outil.

12. Installation selon l'une quelconque des revendications précédentes, caractérisée en ce qu'elle comporte également un ensemble (C) insérable sur la partie terminale de l'embout supérieur (14), muni de moyens (76) de centrage sur la plaque de base (A) et de moyens (66, 70) de stockage de douilles (53) de fixation des tirants (15) sur l'embout supérieur (14) et de guidage d'outils (F, H) d'intervention sur les douilles.

13. Installation selon la revendication 12, caractérisée en ce que l'ensemble (C) insérable est muni de moyens coopérant avec un outil de préhension (D) permettant de manipuler en bloc l'ensemble (C) et le corps de centrage (B), moyens tels que des colonnes (73) munies d'un nez d'introduction de l'outil de préhension et de gorges (74) périphériques.

14. Outil (D) de préhension pour installation suivant la revendication 13, caractérisé en ce qu'il comprend deux tubes coaxiaux (80, 82) verticaux en service, susceptibles de tourner l'un par rapport à l'autre entre une position d'engagement et une position de verrouillage, l'extrémité inférieure du tube externe (80) étant fixée à une plaque (84) munie de guides cylindriques verticaux (86) destinés à coiffer les colonnes de manutention (73) et l'extrémité inférieure du tube interne (82) étant fixée à une pale (90) munie d'encoches qui viennent s'engager dans les gorges horizontales (74) des colonnes (73) et solidarisent l'outil (D) de l'ensemble à manipuler (Figures 7 et 8).

15. Outil (E) de mise en place et d'enlèvement de cônes de centrage (106) dans les extrémités des tirants (15) en remplacement des moyens de fixation amovibles des tirants à l'embout supérieur (14) pour installation suivant l'une quelconque des revendications précédentes, caractérisé en ce qu'il comprend, d'une part, un tube externe (108) muni à sa partie inférieure d'une logement conique (109) de forme correspondant à celle des cônes centreurs (106), constituées par des tiges à extrémités coniques et à partie médiane filetée, ledit tube externe étant solidarisable en rotation du cône sur lequel il est engagé par insertion de tétons (110) qu'il porte dans des rainures (111) des cônes, d'autre part, une tige rotative centrale (112) dont l'extrémité filetée est prévue pour se visser dans un taraudage axial des cônes (Figures 15 et 16).

## Claims

1. Apparatus for repair of a nuclear fuel assembly, the assembly comprising a skeleton having an upper end piece and a lower end piece connected by tie rods (15) removably fixed to at least the upper end piece (14) and grids (12) distributed between the end pieces for maintaining a bundle of fuel rods (11) between the end pieces, said apparatus comprising:
at least one cell immersed in a water tank, vertically displaceable and provided, at the upper part thereof, with a base plate (A) having an opening (29) for passage of an assembly and provided with h means (31-37) actuatable for clamping the upper part of the assembly at the level of the uppermost grid (12);
a centering body (B) arranged to be operable by a handling tool (D), suitable to be placed above the upper end piece (14) of the assembly and to be locked thereon while centering thereon and formed with tubular means (52) for centering a tool (F) placed for alignment with the tie-rods, said tool (F) being insertable through said centering means (52) for disconnecting each of said tie-rods from the upper end piece; and
an assembly (C) comprising a frame (60) wherein the end portion of the upper end piece (14) is insertable, said assembly being provided with means (76) for centering on the base plate (A) and means (70) for guiding a tool (F) for handling sleeves, confronting rings (66) for receiving the sleeves, said rings being carried by an apertured plate (74) belonging to said assembly (C).

2. Apparatus according to claim 1, characterized in that it comprises a tool (J) for handling a fuel rod (11), comprising at least one pole (142) provided with means for displacing the pole in the tank into vertical alignment with a cell (21) and containing a fuel rod clamp (154) which is displaceable vertically within and along the pole and further comprising a unit for horizontal centering of the clamp on a fuel rod.

3. Apparatus according to claim 2, characterized in that the centering unit comprises a carriage (166) fixed to an outer jacket (149) of the lower portion of the pole, horizontally movable on a frame (145) which is vertically engageable on alignment means fast with the base plate.

4. Apparatus according to claim 3, characterized in that the alignment means comprise a plurality of openings formed in plates (40) of the base plate (A), cooperating with centering pins (163) of the frame (145).

5. Apparatus according to claim 3 or 4, characterized in that the alignment means further comprise an excentric sleeve (172) connected against relative horizontal movement with respect to a sheath (150) for vertical guiding of the clamp and means for rotating the sleeve (172) in a ring (158) connected to the carriage against mutual horizontal movement.

6. Apparatus according to claim 3,4 or 5, characterized in that the tool (J) comprises a second pole (144) parallel to the first pole, provided at its lower part with means (166) for driving the carriage, and possibly the sleeve (172) and at its upper part with control means connected mechanically to the driving means.

7. Apparatus according to any one of claims 2-6, characterized in that the pole (142) comprises a feeler (156) displaceable along the axis of the pole (142) between a rest position in which it extends beyond the lower level of the clamp (154) by a predetermined length and an upper position in which it is forced back by a fuel rod when the clamp engages said fuel rod, connected to indicating means at the upper part of the pole.

8. Apparatus according to any one of claims 2-6, characterized in that the lower part of the clamp comprises a composite tube (152) displaceable relative to the clamp between an upper position where the clamp is open and a lower position where the clamp is closed on a fuel rod and in axial contact with the rod.

9. Apparatus according to claim 8, characterized by means located in the pole (142) for lowering together the clamp (154) and the composite tube (152), and possibly the feeler (156), between a lower position where the clamp engages a fuel rod in the cell and an upper position where the clamp holds the whole of the rod in a protective jacket (150) fast with the pole (142).

10. Apparatus according to any one of the preceding claims, characterized in that the centering unit (B) comprises movable jaws (43) for connection with the end-piece, controlled by a cam (48) displaceable along the axis of the body (B) by a threaded connection operable by means of a tool (59) introduced from above.

11. Apparatus according to claim 10, characterized in that the centering body (B) carries centering tubes (52) offering a passage to tools for operating on the sleeves (53) joining the end-piece (14) and the tie rods (15) and, possibly, forming an axial abutment for the tools.

12. Apparatus according any one of the preceding claims, characterized in that it further comprises an assembly (C) adapted to be inserted on an end part of the upper end piece (14), provided with means (76) for centering on the base plate (A) and with means (66. 70) for storing sleeves (53) for fixing the tie-rods (15) on the upper end piece (14) and for guiding tools (F, H) for operating on the sleeves.

13. Apparatus according to claim 12. characterized in that the insertable assembly (C) is provided with means cooperating with a grasping tool (D) for handling as a whole the insertable assembly (C) and the centering body (B), such means possibly being columns (73) provided with a nose for introduction of the grasping tool and with peripheral grooves (74).

14. Grasping tool (D) for an apparatus according to claim 13, characterized in that it comprises two coaxial tubes (80, 82) which are vertical in operation, adapted to rotate with respect to each other between an engagement position and a locking position. the lower end of the external tube (80) being secured to a plate (84) provided with vertical cylindrical guides (86) for encircling the handling columns (73) and the lower end of the internal tube (82) being fixed to a paddle (90) provided with notches which engage into the horizontal grooves (74) of the columns (73) and connect the tool (D) to the assembly to be handled.

15. A tool for mounting in place and removing centering cones (106) in the ends of the tie rods (15) in replacement of the removable means for fixing the tie rods to the upper end-piece (14) for an apparatus according to any preceding claim, characterized in that it comprises: an outer tube (108) provided at its lower part with a conical housing (109) having a shape corresponding to that of centering cones (106), formed by stems having conical ends and a threaded middle part, said outer tube being connectable against mutual rotation with the cone on which it is engaged by insertion of projections (110) formed on it into grooves (111) of the cones ; and a central rotatable rod (112) of which a threaded end is arranged to be screwed into an axial internal thread of the cones.

## Patentansprüche

1. Einrichtung zum Wiederherstellen von Kernbrennelement-kassetten, die ein Gerüst aufweisen, das aus einem unteren Endstück und einem oberen Endstück, die untereinander mittels Zustangen (15), die mindestens am oberen Endstück (14) lösbar befestigt sind, verbunden sind und aus zwischen den Endstücken angeordneten Gittern (12) gebildet ist, wobei die Gitter (12) dazu bestimmt sind, ein Brennelementbündel (11) zwischen den Endstücken zu haltern, und wobei die Einrichtung folgende Teile umfaßt:
- mindestens eine in ein Becken eingetauchte vertikal verschiebbare Hülse, die in ihrem oberen Bereich mit einer Basisplatte (A) versehen ist, die eine Durchgangsöffnung (29) für die Kassette aufweist und mit betätigbaren Mitteln (31-37) zum Klemmen des oberen Teils der Kassette in der Höhe des obersten Gitters ausgerüstet ist;
- einen Zentrierkörper (B), dessen Handhabung durch ein Handhabungswerkzeug (D) vorgesehen ist, und der dazu bestimmt ist, das obere Endstück (14) der Kassette zu überdecken und sich auf diesem zu verriegeln und mit rohrförmigem Werkzeug zentrierenden Stutzen (52) durchbohrt ist, wobei die Zentriermittel mit den Zugstangen ausgerichtet sind und wobei dieses Werkzeug (F) durch die Zentriermittel (52) einführbar ist, um jede Stangen vom oberen Endstück zu lösen; und
- eine Anordnung (C), die einen Rahmen (60) aufweist, in dem der Endteil des oberen Enstückes (14) ansetzbar ist, die mit Zentriervorrichtungen (76) auf der Basisplatte (A) und Führungsmittel (70) eines Werkzeuges (F) zum Eingreifen auf die Hülsen, die gegenüber den Hülsenempfangsringen (66) gelagert sind, aufweist, wobei diese Ringe von einer ausgelochten Platte (74), die der Anordnung (C) angehört, getragen werden.

2. Einrichtung nach Anspruch 1, gekennzeichnet durch ein Werkzeug (J) zur Handhabung von Kernbrennstäben (11), das mindestens eine Stange (142) aufweist. und mit Organen versehen ist, die deren Bewegung im Becken und deren Führung gegenüber einer Hülse (21) ermöglichen und das eine Brennstabzange (154) aufweist, die vertikal in der Stange beweglich ist, wobei das Verkzeug eine Anordnung zum horizontalen Zentrieren der Zange auf einem Brennstab aufweist.

3. Einrichtung nach Anspruch 2, dadurch gekennzeichnet, daß die Zentrieranordnung einen Schlitten (166) aufweist, der an einem Außenmantel des unteren Teils der Stange befestigt ist und auf einem Rahmen (145) horizontale Translationsbewegungen durchführen kann, wobei der Rahmen vertikal auf mit der Basisplatte fest verbundenen Ausrichtorganen ansetzbar ist.

4. Einrichtung nach Anspruch 3, dadurch gekennzeichnet, daß die Ausrichtorgane eine Reihe von Löchern aufweisen, die in Streifen (40) der Basisplatte (A) eingearbeitet sind und mit Zentrierstiften (163) des Rahmens (145) zusammenwirken.

5. Einrichtung nach Anspruch 3 oder 3, dadurch gekennzeichnet, daß die Ausrichtorgane ferner eine exzentrische Hülze (172), die in der Horizontaleben einer vertikalen Führungsscheibe (150) der Zange befestigt ist und Organe zum Verdrehen der- Hülse (172) in einem in der Ebene des Schlittens feststehenden Ring (158) aufweisen.

6. Einrichtung nach Anspruch 3, 4 oder 5, dadurch gekennzeichnet, daß das Werkzeug (J) eine zweite zurersten parallele Stange (144) aufweist, die in ihrem unteren Bereich Antriebsorgane für den Schlitten (166) und gegebenenfalls der Hülse (172) und in ihrem oberen Bereich Steuerorgane. die mechanisch mit den Antriebsorganen verbunden sind, aufweist.

7. Einrichtung nach einem der Ansprüche 2 bis 6, dadurch gekennzeichnet, daß die Stange (142) einen Meßfühler (156) aufweist, der längs der Achse der Stange (142) verschoben werden kann zwischen einer Ruhelage, in der er die untere Ebene der Zange (154) um eine vorbestimmte Länge überschreitet, und einer oberen Lage, in der er durch einen Brennstab zurückgehalten wird, wenn die Zange mit dem mit einem Anzeigeelement am oberen Teil der Stange verbundenen Brennstab in Eingriff steht.

8. Einrichtung nach einem der Ansprüche 2 bis 6, dadurch gekennzeichnet, daß das untere Teil der Zange ein zusammengesetztes Rohr (152) aufweist, das gegenüber der Zange zwischen einer oberen Lage, in der die Zange geöffnet ist, und einer unteren Schließlage der Zange auf einen Brennstab verschoben werden kann und sich axial auf dem Stab abstützt.

9. Einrichtung nach Anspruch 8, gekennzeichnet durch in der Stange (142) vorgesehene Vorrichtungen, die die Zange (154) und das zusammengesetzte Rohr (152) und gegebenenfalls den Meßfühler (156) auf einmal zwischen einer unteren Lage, in der die Zange mit einem Brennstab in der Hülse in Eingriff steht, und einer oberen Lage, in der die Zange den gesamten Brennstab in einem an der Stange (142) befestigten Mantel (150) festhält, miteinander senken.

10. Einrichtung nach einem der vorhergehenden Ansprüche, dadurch gekennzeichnet, daß der Zentrierkörper (B) zum Befestigen an dem Endstück dienende versenkbare Krallen (43) aufweist, die von einem entlang des Körpers (B) verschiebbaren Nocken (48) gesteuert werden, wobei die Nocken über eine mit einem Gewinde versehene Verbindungsstange verschiebbar sind mittels eines von oben eingeführten Werkzeugs.

11. Einrichtung nach Anspruch 10, dadurch gekennzeichnet, daß der Zentrierkörper (B) rohrförmige Zentrierstutzen (52) trägt, die den Werkzeugen freien Zugang ermöglichen zu den Befestigungshülsen (53) des Endstücks (14) und den Zugstangen (15) und gegebenenfalls einen axialen Werkzeuganschlag bilden.

12. Einrichtung nach einem der vorhergehenden Ansprüche, gekennzeichnet durch eine auf dem Abschlußteil des obersten Endstücks (14) einsetzbare Anordnung (C), die mit Zentriervorrichtungen (76) auf der Basisplatte (A) und mit Lagerungsvorrichtungen (66, 70) fürdie Befestigungshülsen (53) der Zugstangen (15) auf dem oberen Endstück sowie zur Führung für Werkzeuge (F, H), zum Eingreifen auf die Befestigungshülsen versehen ist.

13. Einrichtung nach Anspruch 12. dadurch gekennzeichnet, daß die einsetzbare Anordnung (C) mit mit einem Greifwerkzeug (D) zusammenwirkenden Organen versehen ist, die das Handhaben der gesamten Anordnung (C) und des Zentrierkörpers (B) auf einmal ermöglichen, wobei diese Vorrichtungen in Form von Säulen (73) mit einer Nase zum Einführen des Greifwerkzeugs und mit Umfangsnuten (74), ausgeführt sein können.

14. Greifwerkzeug (D) für eine Einrichtung nach Anspruch 13, gekennzeichnet durch zwei im Betrieb aufrechtstehende koaxiale Rohre (80, 82), die sich gegeneinander zwischen einer Eingreif- und einer Verriegelungslage verdrehen können, wobei das untere Ende des äußeren Rohres (80) an einer Platte (84) befestigt ist. die zum Abdecken der Handhabungssäulen (73) bestimmte senkrechtstehende zylindrische Führungen (86) aufweist, und das untere Ende des inneren Rohres (82) an einem mit Einschnitten versehenen Flügel (90) befestigt ist, die passend in die waagerechten Kehlen (74) der Säulen (73) eingreifen und das Werkzeug (D) mit der zu handhabenden Anordnung fest verbinden (Fig. 7 und 8).

15. Werkzeug (E) zum Einsetzen und Herausnehmen von Zentrierkegeln (106) an den Enden der Zugstangen (15) zum Ersatz der auswechselbaren Befestigungsorgane für die an der Betestigung der Zugstangen an dem oberen Endstück (14) für Einrichtungen nach einem der vorhergehenden Ansprüche, gekennzeichnet durch einerseits ein äußeres Rohr (108), das an seinem unteren Teil ein konisches Lager (109) aufweist, das mit den aus endseitig konischen und in der Mitte ein Gewinde aufweisenden Stangen bestehenden Zentrierkegeln (106) zusammenpaßt, wobei dieses äußere Rohr auf dem Kegel, auf den es durch Einfügung von Ansatzstücken (110), in Nuten (111) der Kegel aufgesetzt ist, drehfest angeordnet werden kann, und andererseits durch eine zentrale Drehstange (112), deren mit einem Gewinde versehenes Ende dazu dient, sich in ein axiales Gewindeloch der Kegel einzuschrauben (Fig. 15 und 16).
